# EUROPEAN PATENT APPLICATION

(11) **EP 4 682 077 A1**
(43) Date of publication of application: **21.01.2026**
(21) Application number: 24771025.4
(22) Date of filing: 18.03.2024
(51) Int. Cl.: B65D 65/40, B32B 27/32, B65D 81/26

(54) **OLEFIN RESIN PACKAGING MATERIAL**

(30) Priority: 16.03.2023 JP 2023042194; 01.08.2023 JP 2023125563
(71) Applicant: Toyo Seikan Co., Ltd., Tokyo 141-8640 (JP)
(72) Inventor: ISHIHARA, Takayuki, Yokohama-shi, Kanagawa 230-0001 (JP); OOYAMA, Kazumi, Yokohama-shi, Kanagawa 230-0001 (JP); UEDA, Kousuke, Yokohama-shi, Kanagawa 230-0001 (JP); HAMABE, Takeru, Yokohama-shi, Kanagawa 230-0001 (JP)
(74) Representative: J A Kemp LLP
(86) International application number: PCT/JP2024/010538
(87) International publication number: WO 2024/190923

(57) **Abstract**

The present invention provides an olefin-based resin packaging material containing a large amount of an olefin-based resin, suitable in recyclability of the olefin-based resin, and having excellent characteristics not found in the olefin-based resin. The olefin-based resin packaging material contains, per 100 parts by mass of the packaging material, an olefin-based resin in an amount of 80 parts by mass or more; a resin other than the olefin-based resin in an amount suppressed to less than 16.9 parts by mass; and an iron powder in an amount of less than 5 parts by mass.

## Description

### Technical Field

The present invention relates to a packaging material such as a bag (pouch) formed of an olefin-based resin.

### Background Art

Since an olefin-based resin is inexpensive, exhibits heat sealability, and is easily molded into a bag or the like, it is widely used for molding a packaging material such as a pouch (see Patent Documents 1 and 2).

Since the olefin-based resin has low barrier properties against oxygen, it is necessary to impart barrier properties against oxygen to a packaging material in a final form for packaging a content. Therefore, as described in the patent documents, a gas barrier resin represented by an ethylene-vinyl alcohol copolymer (EVOH) or an aromatic polyamide is often used in combination. However, from the viewpoint of environmental protection in recent years, recyclability of various materials is required, and also in the field of packaging materials, mono-materialization in which the use of different kinds of materials is reduced as much as possible is required. For example, a pouch having an olefin-based resin content of 80 mass% or more has been proposed (see Patent Document 3).

This is because, if a plastic container is molded using the same kind of resin as much as possible, it is easy to recover the resin and reuse it as a container or another plastic molded product.

Oxygen barrier properties are a major obstacle to the mono-materialization of the olefin-based resin. That is, since the use of different kinds of materials is greatly limited in the mono-materialization, the point is how to impart characteristics such as the oxygen barrier properties.

From such a viewpoint, a container having a multilayered structure including an oxygen absorbing layer of an oxygen absorbent (or deoxidizer) containing an iron powder has attracted attention. This is because the iron powder is an inorganic material, and thus can be easily separated from the resin, and also because it is naturally present, and thus does not adversely affect the environment. Further, there is also an advantage that odor components such as aldehyde are not generated along with oxygen absorption.

The oxygen barrier properties exhibited by the oxygen absorbing layer as described above are called active barrier properties because they utilize a reaction between an iron powder and oxygen. Since such characteristics are consumed as the iron powder reacts with oxygen, in general, a multilayered structure including an oxygen barrier resin exhibiting always constant oxygen barrier properties, called passive barrier properties, in combination is often used in molding a container.

However, it has been found that the iron powder used as the oxygen absorbent or deoxidizer as described above causes unexpected inconvenience when used in combination with an ethylene-vinyl alcohol copolymer (EVOH), which is a typical oxygen barrier resin. That is, in a molded product having a multilayered structure including an oxygen barrier layer formed from EVOH or the above-described oxygen absorbing layer, scraps such as burrs generated during molding are often mixed with a virgin resin and reused. According to studies conducted by the present inventors, in the case where an iron powder and EVOH coexist in such a regrind layer, foaming often occurs, which results in a decrease in oxygen barrier properties and an appearance defect of the container. Therefore, it is necessary to prevent such foaming. However, such foaming occurring in the regrind layer has not been considered at all in the related art including the following Patent Documents 4 to 6.

### Citation List

### Patent Documents

Patent Document 1: JP 2015-214352 A
Patent Document 2: JP 2020-97421 A
Patent Document 3: WO 2022/054891
Patent Document 4: JP 5378639 B
Patent Document 5: JP H04-60827 B
Patent Document 6: JP H06-57319 B

### Summary of Invention

### Technical Problem

Accordingly, an object of the present invention is to provide an olefin-based resin packaging material containing a large amount of an olefin-based resin, suitable in recyclability of the olefin-based resin, and having excellent characteristics not found in the olefin-based resin.

Another object of the present invention is to provide the olefin-based resin packaging material with a regrind layer containing an iron powder and an ethylene-vinyl alcohol copolymer and to effectively suppress foaming occurring in the regrind layer.

According to the present invention, there is provided an olefin-based resin packaging material containing, per 100 parts by mass of the packaging material, an olefin-based resin in an amount of 80 parts by mass or more; a resin other than the olefin-based resin in an amount suppressed to less than 16.9 parts by mass; and an iron powder in an amount of less than 5 parts by mass.

### Solution to Problem

As the olefin-based resin packaging material of the present invention, the following aspects are suitably employed.
(1) It is in the form of a film or sheet.
(2) It is in the form of a bag.
(3) It contains a metal halide and an alkaline compound.
(4) It contains a white pigment.
(5) It contains a gas barrier resin.
(6) It has a multilayered structure.
(7) The multilayered structure includes a regrind layer.
(8) The multilayered structure includes olefin-based resin layers as inner and outer layers, and the regrind layer, an oxygen barrier layer, and an oxygen absorbing layer as intermediate layers between the inner and outer layers.

According to the present invention, there is also provided an olefin-based resin packaging material including a regrind layer, the regrind layer containing an olefin-based resin (A), and an iron powder (B) in an amount of from 0.1 to 8.0 parts by mass and an ethylene-vinyl alcohol copolymer (C) in an amount of from 0.1 to 14.0 parts by mass per 100 parts by mass of the olefin-based resin (A).

In the olefin-based resin packaging material of the present invention, suitably, a mass ratio (B/C) of the iron powder (B) to the ethylene-vinyl alcohol copolymer (C) in the regrind layer is 1.0 or less.

### Advantageous Effects of Invention

The olefin-based resin packaging material of the present invention is based on the premise that the olefin-based resin is contained in an amount of 80 parts by mass or more per 100 parts by mass of the packaging material, and the content of a resin component other than the olefin-based resin is suppressed to less than 16.9 parts by mass. For this reason, the recovery of the olefin-based resin becomes easy, and even if a different kind of component is mixed, it is possible to avoid a remarkable deterioration in characteristics of the olefin-based resin due to the mixing of the different kind of component, and also to effectively reuse the olefin-based resin.

Further, in the present invention, the packaging material contains an iron powder in a small amount of less than 5 parts by mass per 100 parts by mass of the packaging material. That is, in order to achieve mono-material properties of the olefin-based resin by blending the iron powder, blending of such a small amount of the iron powder can result in exertion of deoxidizing properties (oxygen absorbing properties) exhibited by the iron powder, and development of the oxygen barrier properties. That is, the oxygen barrier resin such as an ethylene-vinyl alcohol copolymer (EVOH) requires blending of a considerably large amount of an iron powder in order to impart the oxygen barrier properties required of the packaging material, and, further, it is not easy to separate the oxygen barrier resin from the olefin-based resin from the packaging material after use. However, the iron powder is a natural inorganic substance, does not adversely affect the environment, additionally, can be easily separated from the olefin-based resin, and can exhibit oxygen barrier properties in a small amount enough to maintain mono-materialization, thereby making it possible to satisfy both recyclability and oxygen barrier properties of the olefin-based resin.

When the olefin-based resin packaging material of the present invention includes a regrind layer containing the iron powder (B) and the ethylene-vinyl alcohol copolymer (C), the regrind layer contains a large amount of the olefin-based resin (A). That is, a waste material (containing an iron powder and an ethylene-vinyl alcohol copolymer) produced in a production process is used in forming the regrind layer. In the present invention, this waste material is diluted with a large amount of virgin olefin-based resin, and in the regrind layer, the iron powder (B) is present in an amount of from 0.1 to 8.0 parts by mass per 100 parts by mass of the olefin-based resin (A), and the ethylene-vinyl alcohol copolymer (C) is present in an amount of from 0.1 to 14.0 parts by mass per 100 parts by mass of the olefin-based resin (A). As a result, foaming in the regrind layer can be effectively suppressed.

It is presumed that such foaming in the regrind layer is caused by evaporation of a gas generated by thermal degradation of the ethylene-vinyl alcohol copolymer (EVOH) or water generated by a dehydration reaction thereof, and it is likely that iron performs a catalytic function to promote such thermal degradation and reaction of the EVOH. That is, the following probably occurs. Since the EVOH in the regrind layer is contained in the waste material and is thus repeatedly subjected to thermal histories in the presence of iron, the thermal degradation and dehydration reaction of the EVOH are promoted by the catalytic effect of iron to generate gas and to cause foaming. Hence, in the regrind layer provided in the olefin-based resin packaging material of the present invention, iron and EVOH are diluted by a large amount of olefin-based resin. As a result, the catalytic effect of iron becomes weak, thereby effectively suppressing also the thermal degradation and dehydration reaction of the EVOH and preventing foaming.

As can be understood from the fact that iron and EVOH are contained in the regrind layer, the olefin-based resin packaging material of the present invention has an oxygen absorbing layer containing iron and an oxygen barrier layer containing EVOH, whereby it has excellent oxygen barrier properties, thereby making it possible to effectively prevent oxidative degradation of a packaged substance.

In addition, the olefin-based resin packaging material of the present invention is suitable for mono-materialization, and has excellent recyclability because the olefin-based resin is contained in an amount of 80.0 mass% or more, particularly 83.5 mass% or more in the entire packaging material.

### Description of Embodiments

The packaging material of the present invention can have various forms, and may be, for example, a packaging material for accommodating various substances in the form of a film or a sheet, a lid material attached to a mouth of a cup container by heat sealing for use, a bag (pouch) made by heat sealing a film, or a cup container produced by vacuum-molding or plug assist-molding a sheet. Further, the packaging material may be a blow bottle produced by blow-molding a preform formed by extrusion molding or injection molding. However, from the viewpoint of the packaging material having a content of the resin component other than the olefin-based resin of less than 16.9 parts by mass and a content of the iron powder of less than 5 parts by mass per 100 parts by mass of the packaging material, and, further, from the viewpoint of maximally exhibiting the characteristics of the iron powder to be blended, the packaging material is most suitably a bag.

Furthermore, the packaging material may have a single layer structure composed of an olefin-based resin containing an iron powder, or a multilayered structure containing at least one olefin-based resin layer containing an iron powder.

### Olefin-based Resin (Inner and Outer Layers)

As the olefin-based resin used as a main material forming the packaging material of the present invention, an olefin-based resin known per se can be used.

Typical examples of the olefin-based resin include known resins typically used as materials for packaging materials, for example, ethylene-based resins such as low-density polyethylene, medium-density polyethylene, high-density polyethylene and linear low-density polyethylene; and propylene-based resins such as homopolypropylene, random polypropylene (random PP) and block polypropylene (block PP). Further, poly-1-butene, poly-4-methyl-1-pentene, an olefin-based copolymer such as a random or block copolymer of α-olefins such as ethylene, propylene, 1-butene and 4-methyl-1-pentene or the cyclic olefin copolymer disclosed, for example, in JP 2007-284066 A, or the like can also be used.

In the present invention, ethylene-based resins and propylene-based resins which have heretofore been widely used in various applications and are particularly required to be recyclable and excellent in heat sealability are most suitable.

A suitable olefin-based resin as described above is used depending on the characteristics required of the packaging material.

For example, in applications to which heat sterilization such as retort sterilization is applied, a propylene-based resin is particularly suitable, and a block PP having excellent heat resistance and impact resistance is particularly optimal.

When heat sealing is performed for making a bag as in the case of a bag, the film is used in the form of an unstretched film. In this case, strength can be improved by laminating a stretched propylene film on an unstretched olefin-based resin film. In this case, a dry lamination adhesive or the like is used. It is naturally necessary to maintain the olefin-based resin content at 80 parts by mass or more, suitably 83.5 parts by mass or more, and more suitably from 90 to 99 parts by mass per 100 parts by mass of the packaging material.

### Iron Powder (Oxygen Absorbing Layer)

The iron powder used in the present invention is known as an inorganic material exhibiting deoxidizing properties (oxygen absorbing properties). That is, iron reacts with moisture to form divalent iron hydroxide, and this iron hydroxide reacts with oxygen to form iron sesquioxide (Fe₂O₃), thereby absorbing oxygen. This property is utilized for deoxidation to impart oxygen barrier properties to the packaging material and to prevent oxidative degradation of the packaged substance. The iron powder is contained in an amount of less than 5 parts by mass, 4 parts by mass or less, suitably from 0.1 to 4.0 parts by mass, and more suitably from 0.2 to 3.5 parts by mass per 100 parts by mass of the packaging material, and is used in an amount within a range in which the condition that the olefin-based resin content is 80 parts by mass or more is not impaired.

Such an iron powder is usually used as a powder having a BET specific surface area of 0.5 m²/g or more, as disclosed in, for example, Patent Document 4 indicated above. As the iron powder, a known iron powder such as a reduced iron powder, an atomized iron powder, an electrolytic iron powder, or a carbonyl iron powder can be used, but a reduced iron powder is suitably used because of its high oxygen absorbing capability. This is because the reduced iron powder, which is produced by reducing iron ore, has a large specific surface area. Among the reduced iron powders, a rotary reduced iron powder is particularly suitable because of its high purity. In particular, as described in the above patent, an iron powder in which the half-value width of the peak of the (110) plane of iron measured by powder X-ray diffraction (Co-Kα) is adjusted to 0.20°/2θ or less by an appropriate heat treatment is suitable in that the generation of hydrogen as a by-product by an oxygen absorption reaction is suppressed.

The iron powder described above is mixed with the olefin-based resin to form an olefin-based resin layer, but is basically blended in an unstretched layer. This is because the blending of the iron powder impairs stretchability.

The olefin-based resin layer (unstretched layer) containing the iron powder suitably contains a metal halide and an alkaline substance as an auxiliary agent for promoting the oxygen absorption reaction of the iron powder.

The metal halide functions as an auxiliary agent that promotes an oxygen absorption reaction, and is a halide of various metals (for example, an alkali metal, an alkaline earth metal, copper, zinc, iron and the like), and examples thereof can include sodium chloride, sodium bromide, sodium iodide, potassium chloride, potassium bromide, potassium iodide, calcium chloride, magnesium chloride, and barium chloride. In particular, sodium chloride is most suitable in terms of performance as an auxiliary agent and cost.

Such a metal halide may be used in a smaller amount than the iron powder, and is used in an amount of, for example, from 0.1 to 10 parts by mass, particularly from 1 to 5 parts by mass, per 100 parts by mass of the iron powder.

The alkaline substance absorbs water to cause an oxygen absorption reaction by the iron powder to proceed, and for example, magnesium hydroxide, calcium hydroxide, strontium hydroxide, barium hydroxide, magnesium carbonate, calcium carbonate, strontium carbonate, barium carbonate or the like can be used. In particular, a non-carbonate-based compound is preferable from the viewpoint of avoiding foaming, and slaked lime (calcium hydroxide) and quicklime (calcium oxide) are suitably used.

Such an alkaline substance may also be used in a smaller amount than the iron powder, and is used in an amount of, for example, from 0.5 to 2 parts by mass, particularly from 1 to 2 parts by mass, per 100 parts by mass of the iron powder.

As a matter of course, the auxiliary agent used together with the iron powder is used in an amount within a range in which the condition that the olefin-based resin content is 80 parts by mass or more per 100 parts by mass of the packaging material is not impaired. However, the auxiliary agent is used in a very small amount as compared with the iron powder, as described above, and thus this condition is not impaired.

As the oxygen absorbent containing an iron powder, a metal halide, and an alkaline substance, for example, the oxygen absorbent described in Patent Document 4 is suitably used.

The oxygen absorbent as described above is appropriately pulverized and dispersed in the olefin-based resin as a mixed powder having an average particle diameter (median diameter) of about from 1 to 40 µm to form the oxygen absorbing layer. Such an olefin-based resin is also used for forming the inner and outer layers, and particularly from the viewpoint of mono-materialization, it is preferable to use the same kind of olefin-based resin as the olefin-based resin forming the inner and outer layers. For example, when the inner and outer layers are formed of polypropylene, it is optimum to use polypropylene also for the oxygen absorbing layer.

In such an oxygen absorbing layer, the mixed powder of the oxygen absorbent is dispersed in the olefin-based resin so that the iron powder concentration is 29 mass% or more, particularly about from 29 to 60 mass%.

It is also possible to use an oxygen absorbing barrier layer produced by mixing the above-described EVOH into the oxygen absorbing layer. In this case, the oxygen barrier layer of EVOH described above can be omitted, which is advantageous in that the number of layers of the laminate can be reduced to ensure high oxygen barrier properties. However, when the iron powder of the oxygen absorbent and the EVOH coexist in the same layer, the degradation and dehydration reaction of the EVOH tend to be promoted. Therefore, in the present invention, the oxygen absorbent (iron powder) and the EVOH are suitably present in different layers. That is, desirably, an active barrier layer and a passive barrier layer exist in a functionally separated manner.

### Other Materials

In the present invention, materials other than the iron powder may be contained within a range in which the condition that the olefin-based resin content is 80 parts by mass or more per 100 parts by mass of the packaging material is not impaired.

For example, in order to reinforce strength, a stretched film can be laminated on an unstretched olefin-based resin film (iron powder-containing film). Typical examples of such a stretched film include a film of polyamide such as nylon and a film of polyester such as polyethylene terephthalate (PET) in addition to a stretched film of polypropylene. That is, when a resin film other than the olefin-based resin film is used, the thickness of the resin film is significantly thin as compared with the total thickness of the laminated film so as to satisfy the above condition.

Furthermore, in order to laminate the stretched film on the unstretched olefin-based resin film (iron powder-containing film), a dry laminating adhesive or the like is used. Typical examples of such an adhesive include an epoxy-based adhesive and a urethane-based adhesive. Of course, the layer formed by such an adhesive is also a very thin layer in order to satisfy the above-described olefin-based resin content.

### Gas Barrier Layer

Furthermore, a typically known gas barrier resin such as an ethylene-vinyl alcohol copolymer (EVOH) or an aromatic polyamide can also be used as long as the olefin-based resin content described above is satisfied.

In addition, when a gas barrier resin is used, it is suitable to mix an olefin-based resin in the layer and to omit the adhesive layer. As a result, the layer can be made thinner than in the case where the layer of the gas barrier resin is provided independently, and the use of an adhesive is not necessary.

Further, as a barrier material other than EVOH and aromatic amide, it is also desirable to use a stretched olefin-based resin film on which an inorganic material such as alumina or silica is deposited from the viewpoint of mono-materialization.

Further, EVOH tends to be deteriorated by heating in the coexistence with iron powder. Therefore, the layer of the olefin-based resin containing EVOH and the layer containing the iron powder are suitably separate layers, but when a mixture layer containing EVOH and the iron powder is used as in Examples described later, EVOH is preferably contained in an amount of less than 15.0 parts by mass, suitably less than 10 parts by mass, more suitably less than 5.0 parts by mass, and even more suitably less than 4.0 parts by mass per 100 parts by mass of the packaging material, though depending on the content of the iron powder.

### White Resin Layer

In addition, an olefin-based resin layer blended with an iron powder has a color close to black, which may deteriorate the appearance characteristics of the packaging material and impair the commercial value. Therefore, in the packaging material of the present invention having an olefin-based resin layer blended with an iron powder, it is preferable to provide an olefin-based resin layer containing a white pigment dispersed therein.

That is, by providing the white pigment-dispersed olefin-based resin layer on the outer surface side of the olefin-based resin layer blended with the iron powder, the deterioration of the appearance characteristics due to the use of the iron powder is avoided.

Examples of such a white pigment can include titanium oxide and zinc oxide. Needless to say, the amount of the white pigment to be used is also set so that the olefin-based resin content is 80 parts by mass or more per 100 parts by mass of the packaging material.

### Regrind Layer

The olefin-based resin packaging material of the present invention suitably has a regrind layer that effectively utilizes a waste material, and even in the packaging material including such a regrind layer, the content of the olefin-based resin is maintained at 80 parts by mass or more per 100 parts by mass of the packaging material.

The regrind layer is a pre-consumer material, and is a layer formed by using a waste material generated in a manufacturing process before reaching a consumer, particularly a waste material (scrap) generated in a production process of the same product in a factory. For example, a waste material (called trim) generated by deburring or the like in a molding step, a waste material (called skeleton) generated by punching or the like, or the like is reused.

Therefore, the regrind layer contains the above-described iron powder (oxygen absorbent) and EVOH. Therefore, the iron powder used as the oxygen absorbent and the EVOH coexist in the regrind layer. That is, since the EVOH in this layer is subjected to a thermal history at a temperature equal to or higher than the melting point at the time of molding (extrusion molding, injection molding, or the like) of the laminate, the EVOH is subjected again to a thermal history at a temperature equal to or higher than the melting point. Therefore, in the regrind layer, the EVOH which has been subjected to a thermal history is subjected to a thermal history again in the coexistence with the iron powder, and as a result, the thermal degradation and dehydration reaction of the EVOH remarkably proceed, and foaming is liable to occur.

In the present invention, in order to prevent such foaming in the regrind layer, the above-described waste material is diluted with a large amount of an olefin-based resin and used for forming the regrind layer. Specifically, in the regrind layer, the iron powder (B) is contained in an amount of from 0.1 to 8.0 parts by mass, preferably from 0.4 to 7.7 parts by mass, and more preferably from 0.4 to 6.0 parts by mass, and the ethylene-vinyl alcohol copolymer (C) is contained in an amount of from 0.1 to 14.0 parts by mass, preferably from 0.7 to 13.3 parts by mass, more preferably from 0.7 to 10.0 parts by mass, and particularly from 2.0 to 10.0 parts by mass, per 100 parts by mass of the olefin-based resin (A). That is, the above-described waste material (scrap) contains an olefin-based resin, and the waste material is mixed with a virgin olefin-based resin so as to satisfy the above-described amount ratio to prepare a resin composition for a regrind layer, which is used for molding a packaging material. Thus, foaming can be effectively prevented by diluting and adjusting the concentration of the waste materials (particularly, iron powder and EVOH) present in the regrind layer.

For example, when the amount of the iron powder or the EVOH is larger than the above-described range, foaming occurs, and inconveniences such as delamination and an appearance defect due to foaming become remarkable. On the other hand, when the amount of the iron powder or the EVOH is smaller than the above range, foaming does not occur, but there is no particular advantage, and, additionally, an excessive use of the virgin olefin-based resin causes an increase in cost and an unnecessary increase in thickness of the laminate.

In the present invention, the mass ratio (B/C) of the iron powder (B) to the EVOH (C) is suitably adjusted to 1.0 or less so that the amounts of the iron powder and the EVOH in the regrind layer satisfy the above ranges. This is because, if the iron powder is excessively contained with respect to the EVOH, foaming is likely to occur.

Those skilled in the art should easily understand that, in the present invention, in order to satisfy the above-described ranges for the amounts of iron powder and EVOH in the regrind layer, it is necessary to set the amount of the virgin polyolefin used for diluting the waste material within a certain range and to design the layers so that the thicknesses of the oxygen absorbing layer and the EVOH layer included in the packaging material are within certain ranges.

### Adhesive Layer

The adhesive layer is a layer used for enhancing the adhesive force to the inner and outer layers, the oxygen absorbing layer and the EVOH layer and preventing delamination, and is formed by using a known adhesive resin.

Such an adhesive resin is, for example, a resin containing a carbonyl group (>C=O) in the main chain or side chain in an amount of from 1 to 100 meq/100 g resin, particularly from 10 to 100 meq/100 g resin, and specific examples thereof can include olefin resins graft-modified with carboxylic acids such as maleic acid, itaconic acid and fumaric acid or anhydrides, amides and esters thereof; ethylene-acrylic copolymers; ionically crosslinked olefin-based copolymers; and ethylene-vinyl acetate copolymers.

### Layer Structure

The packaging material of the present invention is most suitable particularly as a bag (pouch). An example of the layer structure of the film forming the pouch is shown below, but the layer structure is not limited thereto. If necessary, the presence or absence of the adhesive layer and the structure of each layer can be changed. The black appearance derived from the iron powder can be avoided by adding a white pigment such as titanium oxide to the iron powder-containing olefin layer or forming a multilayered structure.

In the following description, the following abbreviations are used:
CPO: unstretched olefin-based resin (without iron powder)
FeCPO: iron powder-containing olefin-based resin (Abs: oxygen absorbing layer)
OPO: stretched olefin-based resin
VOPO: vapor-deposited stretched olefin-based resin
AD: adhesive layer
EV: EVOH
EV + Fe + OL: mixture layer of EVOH, iron powder, and olefin-based resin
REG: regrind layer
WH: white resin layer

### FeCPO (single layer)

(Inner) CPO/FeCPO (Outer)
(Inner) CPO/FeCPO/CPO (Outer)
(Inner) CPO/FeCPO/OPO (Outer)
(Inner) CPO/FeCPO/VOPO (Outer)
(Inner) CPO/EV + Fe + OL/VOPO (Outer)
(Inner) CPO/FeCPO/AD/VOPO (Outer)
(Inner) CPO/EV + Fe + OL/AD/VOPO (Outer)
(Inner) CPO/FeCPO/VOPO/AD/OPO (Outer)
(Inner) CPO/EV + Fe + OL/VOPO/AD/OPO (Outer)
(Inner) CPO/FeCPO/AD/EV/AD/CPO (Outer)
(Inner) CPO/FeCPO/AD/EV/AD/EV + Fe + OL/CPO (Outer)
(Inner) CPO/FeCPO/EV + Fe + OL/AD/EV/AD/EV + Fe + OL/CPO (Outer)
(Inner) CPO/EV + Fe + OL/AD/EV/AD/CPO (Outer)
(Inner) COP/Abs/AD/EV/AD/REG/COP (Outer)
(Inner) COP/AD/EV/AD/Abs/REG/COP (Outer)
(Inner) COP/WH/Abs/AD/EV/AD/REG/WH/COP (Outer)
(Inner) COP/WH/Abs/AD/EV/AD/REG/WH (Outer)
(Inner) WH/Abs/AD/EV/AD/REG/WH (Outer)
(Inner) COP/WH/REG/AD/Abs/AD/EV/AD/WH/COP (Outer)
(Inner) COP/WH/AD/EV/AD/Abs/REG/WH/COP (Outer)

The "inner" refers to an inner surface side that comes into contact with the packaged substance, and the "outer" refers to an outer surface side that does not come into contact with the content.

In such a layer structure, the thickness of each layer is set so as to satisfy the characteristics required in accordance with the application of the packaging material (laminate), and it is needless to say that the amounts of the oxygen absorbent (iron powder) and the EVOH in the regrind layer depend on the thicknesses of the oxygen absorbing layer and the EVOH layer. Therefore, as described above, it is necessary to set the thicknesses of the oxygen absorbing layer and the EVOH layer so that the amounts of the iron powder and the EVOH in the regrind layer can satisfy the above-described condition.

Furthermore, in the present invention, on the condition that the amounts of the iron powder and the resin (EVOH) other than the olefin-based resin satisfy the condition described above, the thickness of the regrind layer is preferably from 10% to 90%, particularly preferably from 15% to 80% with respect to the layer thickness of the packaging material (laminate). When the thickness of the regrind layer is small, the merit of effective utilization of the waste material is lowered, and when the thickness is too large, the appearance defect due to foaming becomes remarkable. Further, it is suitable to provide the regrind layer on an outer side of the container from the EVOH layer in terms of flavor to the content. This is because the regrind layer is subjected to many thermal histories and may generate a resin degradation odor, but the resin degradation odor can be reduced by the EVOH layer.

### Recyclability of Olefin-based Resin

In the olefin-based resin packaging material of the present invention, from the viewpoint of recyclability, the amount of the olefin-based resin is preferably adjusted so that the content of the olefin-based resin amount is 80.0 mass% or more, particularly 83.5 mass% or more, based on the entire packaging material (laminate). Further, most suitably, all the olefin-based resins to be used are of the same kind. By such mono-materialization, sufficient recyclability can be realized. For example, the iron powder has a high specific gravity and can be easily separated from the used packaging laminate.

For example, the waste of the packaging material is recovered, appropriately separated from other molded articles (for example, polyester molded articles), and subjected to grinding, washing, separation based on specific gravity, and the like to eliminate foreign matter as much as possible. Thereafter, it is dissolved in an appropriate solvent to separate inorganic substances such as an iron powder and a white pigment from the olefin-based resin.

Since the olefin-based resin thus separated hardly contains a different kind of resin, the separated olefin-based resin is reused again as the olefin-based resin. Usually, the separated olefin-based resin is mixed with a virgin olefin-based resin, and the mixture is utilized for manufacture of various plastic molded articles.

Instead of separating inorganic substances such as iron powder from the pulverized product from which foreign substances have been removed using a solvent, the olefin-based resin may be decomposed (gasified) by heating and used as a heat source.

The inorganic substances separated from the olefin-based resin can be used as the iron powder for deoxidization by recovering iron with a magnet and appropriately performing alkali washing or the like.

The olefin-based resin packaging material (laminate) of the present invention can be imparted with oxygen barrier properties with a small amount of iron powder, and is molded into a film or a sheet by a known molding means such as extrusion molding or injection molding. In the case of a film, the olefin-based resin packaging material can be made into a bag by making use of the heat sealability of the olefin-based resin of the inner surface layer, and can be put to practical use as a bag-shaped container (pouch), or can be used as a lid material of a cup-shaped container. The sheet-shaped material may be shaped into a cup shape by pressure molding, vacuum molding, plug assist molding, or the like, and used as a cup container. Further, the laminate of the present invention can be shaped into a tube shape or a bottle shape by tube molding or blow molding for use.

### Examples

The present invention will be further described with examples, but the present invention is not limited to these.

### Resin Used

Resin materials used for molding a container are as follows.
Outermost PP Layer, Inner PP Layer:
   Ethylene-propylene block copolymer
   MFR: 0.5 g/10 min, 230°C
   Density: 0.90 g/cm³
Adhesive Layer:
   Maleic anhydride-modified polypropylene
   MFR: 5.7 g/10 min, 230°C
   Density: 0.89 g/cm³
EVOH Layer:
   Ethylene-vinyl alcohol polymer
   Ethylene content: 32 mol%
   MFR: 2.0 g/10 min, 190°C
   Density: 1.17 g/cm³
Mixture Layer:
   A dry blend of the PP resin used in the outermost layer or the inner layer, EVOH and an iron powder-containing olefin-based resin.

As the iron powder-containing olefin-based resin, a resin composition produced by melt-kneading 29 parts by mass of an oxygen absorbent and 71 parts by mass of random polypropylene with a twin-screw extruder was used.

The oxygen absorbent consists of 100 parts by mass of reduced iron having an apparent density of 1.86 g/cm³, 2 parts by mass of sodium chloride and 1 part by mass of calcium hydroxide.

The random polypropylene used had an MFR of 1.2 g/10 minutes (230°C) and a density of 0.91 g/cm³.

### Oxygen Absorbing Layer:

A resin composition produced by melt-kneading 29 parts by mass of the oxygen absorbent and 71 parts by mass of the random polypropylene with a twin-screw extruder (iron powder-containing olefin-based resin).

### Regrind Layer:

A mixture of a waste material (trim, skeleton) at the time of molding with a PP resin.

### Examples 1 to 4 and Comparative Examples 1 and 2

The proportion of each component used in the mixture layer was variously changed as shown in Table 1 below. Using a 4-type 6-layer multilayered sheet molding machine, resins were melt-kneaded by a single-screw extruder, extruded into a sheet shape from a T-die at a T-die temperature of 230°C, and then brought into contact with a cooling roll to solidify. The solidified sheet was wound, and thus a multilayered sheet having a thickness of 500 µm was molded.

The layer structure was as follows from the outside: outermost PP layer 85 µm/adhesive layer 10 µm/EVOH layer 15 µm/adhesive layer 10 µm/mixture layer 130 µm/inner PP layer 250 µm.

Furthermore, the resulting multilayered sheet was heated at 145°C and subjected to plug-assisted vacuum pressure molding, and thus a container (multilayered tray having a flange) was molded.

The dimensions of the container are as follows.
Flange Outer Diameter:
   Long axis: 155 mm × short axis: 120 mm
Aperture:
   Long axis: 135 mm × short axis: 100 mm
Bottom Outer Diameter:
   Long axis: 115 mm × short axis: 90 mm, height 35 mm

The resulting container was used to evaluate the influence of the resin blending amount of the mixture layer on the oxygen barrier.

The evaluation method is as follows.

After purging with nitrogen in a glove box, a barrier film produced by dry-laminating a silica-deposited film and a non-stretched polypropylene film was used as a lid material, and 5 mL of distilled water was dropped into the container, followed by heat sealing. Then, the sample was stored at 30°C and 80% RH over time, and the oxygen concentration was measured by gas chromatography.

A case where the amount of increase in oxygen concentration in the container after 1 month was 0% was evaluated as ⊚, a case where the amount was less than 0.5% was evaluated as ○, and a case where the amount was 0.5% or more was evaluated as ×.

The evaluation results are also presented in Table 1.

**[Table 1]**

| | Blending proportion (parts by mass) of each resin per 100 parts by mass of resin in mixture layer | | | | Each component proportion (parts by mass) per 100 parts by mass of packaging material | | | Oxygen barrier property evaluation (%) |
|---|---|---|---|---|---|---|---|---|
| | PP | EVOH | Iron powder-containing olefin-based resin | Iron powder | PP | Resin other than PP | Iron powder | |
| Example 1 | 93.8 | 2.4 | 3.8 | 0.6 | 96.2 | 3.6 | 0.2 | ○ 0.32 |
| Example 2 | 89.9 | 2.4 | 7.7 | 1.3 | 96.1 | 3.6 | 0.3 | ⊚ 0.0 |
| Example 3 | 81.7 | 2.4 | 15.9 | 2.6 | 95.7 | 3.6 | 0.7 | ⊚ 0.0 |
| Example 4 | 73.1 | 2.4 | 24.5 | 4.0 | 95.2 | 3.7 | 1.1 | ⊚ 0.0 |
| Comparative Example 1 | 97.6 | 2.4 | 0 | 0 | 96.4 | 3.6 | 0 | × 0.93 |
| Comparative Example 2 | 100 | 0 | 0 | 0 | 97.0 | 3 | 0 | × 1.2 |

### Examples 5 to 10 and Comparative Example 3

Multilayered sheets and containers were molded in the same manner as in the above Examples, except that the layer structure was PP layer 85 µm/regrind layer 130 µm/adhesive layer 10 µm/EVOH layer 15 µm/adhesive layer 10 µm/oxygen absorbing layer 30 µm/PP layer 220 µm from the outside, and that the proportions of waste materials in the regrind layer were as shown in Table 2.

The appearance state was evaluated using the obtained multilayered sheet and container.

The evaluation was carried out by visual observation of the surface state of the multilayered sheet and the container at the time of molding and observation of the cross section.

A case where foaming was observed in neither the multilayered sheet nor the container was evaluated as ⊚, a case where no foaming was observed in the multilayered sheet was evaluated as ○, and a case where foaming was observed in the multilayered sheet was evaluated as ×.

The evaluation results are also presented in Table 2.

**[Table 2]**

| | Blending proportion (parts by mass) of each component per 100 parts by mass of olefin resin in regrind layer | | Iron powder/ EVOH | Each component proportion (parts by mass) per 100 parts by mass of packaging material | | Sheet appearance |
|---|---|---|---|---|---|---|
| | Iron powder | EVOH | | Olefin-based resin | Resins other than resin indicated on left side | |
| Example 5 | 0.4 | 0.7 | 0.6 | 88.9 | 11.1 | ⊚ |
| Example 6 | 1.6 | 6.1 | 0.3 | 83.5 | 16.5 | ⊚ |
| Example 7 | 1.9 | 3.3 | 0.6 | 88.2 | 11.8 | ⊚ |
| Example 8 | 5.6 | 9.7 | 0.6 | 85.2 | 14.8 | ⊚ |
| Example 9 | 6.6 | 11.4 | 0.6 | 84.5 | 15.5 | ○ |
| Example 10 | 7.7 | 13.3 | 0.6 | 83.8 | 16.2 | ○ |
| Comparative Example 3 | 8.9 | 15.3 | 0.6 | 83.1 | 16.9 | × |

## Claims

1. An olefin-based resin packaging material comprising, per 100 parts by mass of the packaging material:
an olefin-based resin in an amount of 80 parts by mass or more;
a resin other than the olefin-based resin in an amount suppressed to less than 16.9 parts by mass; and
an iron powder in an amount of less than 5 parts by mass.

2. The olefin-based resin packaging material according to claim 1, which is in the form of a film or a sheet.

3. The olefin-based resin packaging material according to claim 1, which is in the form of a bag.

4. The olefin-based resin packaging material according to claim 1, further comprising a metal halide and an alkaline compound.

5. The olefin-based resin packaging material according to claim 1, further comprising a white pigment.

6. The olefin-based resin packaging material according to claim 1, further comprising a gas barrier resin.

7. The olefin-based resin packaging material according to claim 1, which has a multilayered structure.

8. The olefin-based resin packaging material according to claim 7, wherein the multilayered structure comprises a regrind layer.

9. The olefin-based resin packaging material according to claim 8, wherein the multilayered structure comprises olefin-based resin layers as inner and outer layers, and the regrind layer, an oxygen barrier layer, and an oxygen absorbing layer as intermediate layers between the inner and outer layers.

10. An olefin-based resin packaging material comprising a regrind layer, the regrind layer comprising an olefin-based resin (A), and an iron powder (B) in an amount of from 0.1 to 8.0 parts by mass and an ethylene-vinyl alcohol copolymer (C) in an amount of from 0.1 to 14.0 parts by mass per 100 parts by mass of the olefin-based resin (A).

11. The olefin-based resin packaging material according to claim 10, wherein a mass ratio (B/C) of the iron powder (B) to the ethylene-vinyl alcohol copolymer (C) in the regrind layer is 1.0 or less.
